# EUROPÄISCHE PATENTSCHRIFT

(11) **EP 0 491 832 B1**
(45) Veröffentlichungstag und Bekanntmachung des Hinweises auf die Patenterteilung: **08.12.1993**
(21) Anmeldenummer: 90914395.0
(22) Anmeldetag: 13.09.1990
(51) Int. Cl.: B65D 85/68, B65D 5/50

(54) **Verpackung für Nähmaschinen**
Packaging for sewing machines
Emballage pour machines à coudre

(30) Priorität: 23.09.1989 DE 3931855
(43) Veröffentlichungstag der Anmeldung: 01.07.1992
(73) Patentinhaber: G.M. PFAFF AKTIENGESELLSCHAFT, 67655 Kaiserslautern (DE)
(72) Erfinder: MEIER, Günter, D-7500 Karlsruhe 41 (DE); SCHÜTT, Peter, D-7516 Karlsbad-Auerbach (DE)
(86) Internationale Anmeldenummer: EP9001548
(87) Internationale Veröffentlichungsnummer: WO9104204

(56) Entgegenhaltungen:
- FR-A- 2 553 060
- GB-A- 751 366
- US-A- 2 018 605

## Beschreibung

Die Erfindung betrifft eine aus einem Innenteil und einem das Innenteil umgreifenden Außenteil bestehende Verpackung für eine Nähmaschine.

Allgemein sind faltbare Verpackungseinheiten bekannt, die aus einem Innenteil und einem Außenteil bestehen, wobei sich das Innenteil aus mehreren voneinander unabhängigen Einzelelementen zusammensetzt, die das Verpackungsgut zum Zwecke der Vermeidung von Lageveränderungen gegen das Außenteil abstützen. Das Verpackungsgut liegt mit seiner Grundfläche auf der Bodenfläche des Außtenteils auf.

Diese Verpackungen gewährleisten keinen zuverlässigen stoß- und erschütterungsgedämpften Transport und sind jeweils nur für eine vorbestimmte Art und Größe des zu verpackenden Gutes geeignet.

In der DE-U-1 771 966 ist eine Verpackung für oberflächenempfindliche Güter, insbesondere Nachrichtengeräte mit poliertem Gehäuse beschrieben, bei der das Innenteil aus zwei, jeweils faltbaren Teilen gebildet ist, und dieses Innenteil im Gebrauchszustand an den Innenflächen des Außenteils anliegt, und bei dem jede Innenfläche Polster aufweist, an denen das jeweilige oberflächenempfindliche Gut anliegt und die die Bewegungen des Verpackungsgutes in der Verpackung aufnehmen. Diese Polster bestehen jeweils aus einem Sockel aus Wellpappe und einer an dessen Berührungsfläche mit dem Verpackungsgut angeordneten Auflage aus Schaumstoff. Die Schaumstoffauflage dient der Vermeidung von Verkratzungen an den polierten Oberflächen des Verpackungsgutes.

Nachteilig ist, daß die Verpackung lediglich für Verpackungsgut einer vorbestimmten Art und Größe, vorzugsweise jedoch für im wesentlichen quaderförmiges Verpackungsgut und nicht für Verpackungsgut einer davon abweichenden Form geeignet ist. Die Verpackung kann überdies für ein vergleichweise schweres Verpackungsgut, insbesondere eine Nähmaschine, keinen zuverlässigen stoß- und erschütterungsgedämpften Transport gewährleisten, da die das Verpackungsgut tragenden Polster nur eine geringe stoßdämpfende Wirkung haben. Außerdem ist das Außenteil nicht faltbar, da sein Boden aus einer mit allen Seitenflächen fest verbundenen einteiligen Wandung besteht. Die Lagerhaltung der Verpackung ist damit raumaufwendig, und ihre Wiederverwendbarkeit ist nur für eine Verpackungsgut der vorbestimmten Art und Größe gegeben.

In der FR-A-2.553.060 ist eine Verpackung für zerbrechliche Artikel beschrieben, bei der das Innenteil einen Sockel aus Karton, der aus einer rechtwinkligen,ebenen, mit an den Außenkanten rechtwinklig nach unten geklappten, vier gleich hohen Rändern verlängerten Platte besteht, und eine Karton-Abtrennung aufweist, die auf dem Sockel einen mittleren Bereich umgibt und sich senkrecht auf dem Sockel bis an die Oberkante der Verpackung erhebt. Das Verpackungsgut ist innerhalb der Karton-Abtrennung auf der Platte angeordnet und wird dort durch eine an der Platte befestigte und dasselbe umgebenen Plastikfolie fixiert.

Die Verpackung ist nur für vergleichsweise leichtes Verpackungsgut geeignet und hat eine geringe stoßdämpfende Wirkung.

Der Erfindung liegt die Aufgabe zugrunde, eine Verpackung für eine Nähmaschine beliebiger Größe und Form zu schaffen. Dabei soll die Nähmaschine innerhalb der Verpackung in einer vorbestimmbaren Lage fixiert und stoßumempfindlich aufgenommen sein.

Diese Aufgabe wird bei Verwendung einer aus einem Innenteil und einem dieses umgreifenden Außenteil bestehenden Verpackung durch die Merkmale des Patentanspruchs 1 gelöst.

Die besonderen Vorteile der Lösung bestehen darin, daß die Verpackung eine Nähmaschine als ein vergleichsweise schweres Verpackungsgut aufnehmen kann, und daß insbesondere das auf den Stützen ruhende und eine Brücke bildende Trageteil, an dem die Nähmaschine mit ihrem Gewicht hängt, aber auch die Stützen infolge ihrer Ausdehnung bzw. Höhe, Stöße und Erschütterungen dämpfen, die insbesondere beim Transport auf den Boden der Verpackung ausgeübt werden. Durch die an der Wandung des Außenteils anliegenden und in diesem Abstand zueinander gehaltenen Stützen erhält die Verpackung die für die Aufnahme und insbesondere den Transport einer Nähmaschine erforderliche Stabilität.

Die Verpackung kann jede Nähmaschine aufnehmen, deren Höhe kleiner als die vorbestimmte maximale Höhe einer zu verpackenden Nähmaschine ist, und deren Länge kleiner als die für eine vorbestimmte maximale Länge einer zu verpackenden Nähmaschine vorgesehene lichte Weite zwischen den Stützen ist. Die Verpackung gestattet unter der genannten Bedingung die Aufnahme von Nähmaschinen unterschiedlicher unregelmäßiger Gestalt, sofern sich diese an der Tragebrücke befestigen lassen.

Die Maßnahme nach Anspruch 2 gestattet in einfacher Weise sowohl die Herstellung und Einhaltung des vorbestimmten Abstandes der Stützen als auch deren Fixierung im bzw. am Außenteil der Verpackung, woraus eine definierte Lage des auf den Stutzen ruhenden Trageteils folgt.

Die Maßnahme nach Anspruch 3 dient einerseits in vorteilhafter Weise der Erhöhung der Tragefähigkeit und der Elastizität des Trageteils und erleichtert die Zuordnung von Innen- und Außenteil, was sich insbesondere beim Verpackungsvorgang selbst als vorteilhaft erweist, und übt zusätzlich eine stabilisierende Funktion auf die Verpackungseinheit aus.

Die Maßnahme nach Anspruch 4 hat den Vorteil, daß das Außenteil faltbar ist, so daß sich in der Nichtgebrauchslage eine raumsparende Stapelung der Verpackung erzielen läßt, und erleichtert den Verpackungsvorgang.

Die Maßnahme nach Anspruch 5 gewährleistet in vorteilhafter Weise, daß Boden und Deckel durch das eine Nähmaschine tragende Innenteil belastbar sind.

Die Maßnahme nach Anspruch 6 erleichtert die Handhabung der eine **Nähmaschine** beinhaltenden Verpackung, insbesondere aber auch den Verpackungsvorgang selbst, bei dem die Verpackung mit **der** am Innenteil befestigten **Nähmaschine** unter Beachtung der im Anspruch 4 vorgesehenen Maßnahme gewendet werden muß. Das Innenteil wird gemeinsam mit dem Außenteil gegriffen, wodurch das Außenteil, insbesondere aber der Boden des Außenteils, auf dem die Stützen mit dem Gewicht **der Nähmaschine** ruhen, entlastet wird.

Die Erfindung wird nachstehend an einem Ausführungsbeispiel näher erläutert. Es zeigen:
- Fig. 1: ein Tragteil mit **einer** zu befestigenden **Nähmaschine**
- Fig. 2: ein Innenteil mit daran befestigter Nähmaschine und mit Außenteil
- Fig. 3: ein über das Innenteil mit befestigter Nähmaschine gestülptes Außenteil und ein einzulegendes Distanzelement
- Fig. 4: das Außenteil mit geschlossenem Boden
- Fig. 5: ein um 180° gewendetes Außenteil mit geöffnetem Deckel und angedeutetem Innenteil mit Nähmaschine in Hängelage
- Fig. 6: das Innenteil mit **Nähmaschine** in Verpackungslage

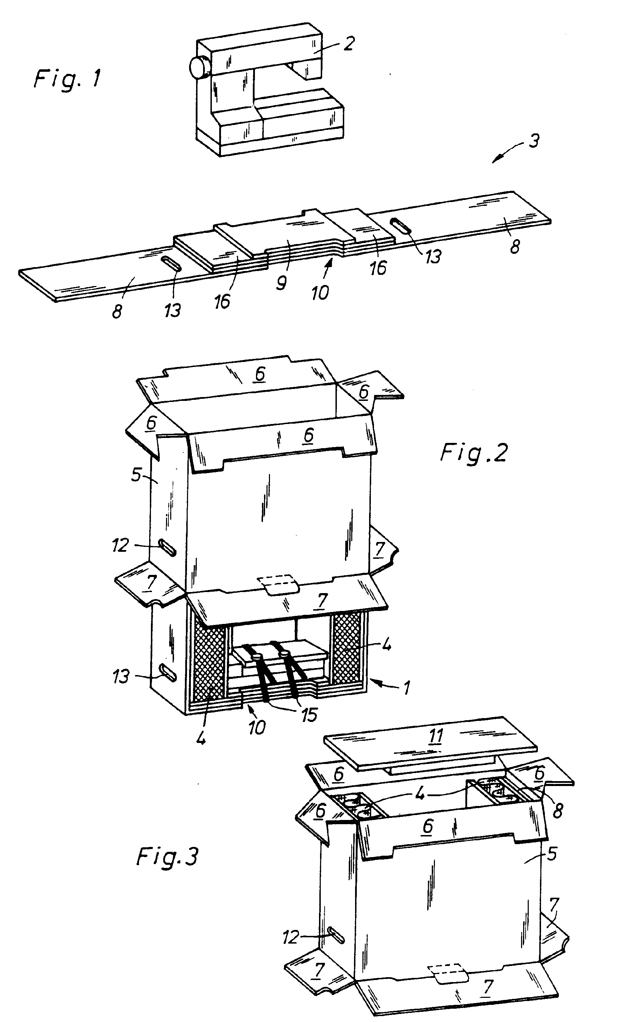

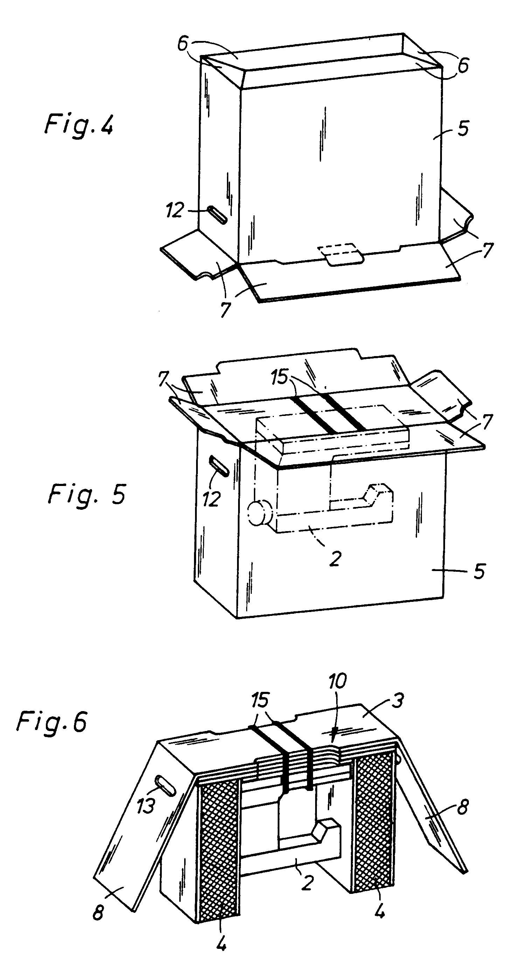

Die Verpackung besteht aus einem Innenteil 1 in Form einer Tragebrücke (Fig. 6), die zur Befestigung **der** **Nähmaschine** 2 ein Trageteil 3 und zwei Stützen 4 aufweist, und einem das Innenteil 1 umgreifenden Außenteil 5 (Fig. 2 und 3). **Die** **Nähmaschine** 2 wird am Trageteil 3 hängend aufgenommen. Boden 6 und Deckel 7 des Außenteils 5 bestehen aus mit den Seitenflächen scharnierartig verbunden und ineinander verschränkbaren Teilflächen.

Das Trageteil 3 besteht aus vier übereinanderliegenden Kartonlagen, von denen die **der Nähmaschine** abgewandte Kartonlage schmalseitig Fortsätze 8 aufweist, deren Länge der Länge der Stützen 4 entspricht, und die zwischen Außenteil 5 und die jeweilige Stütze 4 ragen.

Die **der** **Nähmaschine** 2 zugewandte Kartonlage ist beidseitig um einen der Stützendicke entsprechenden Betrag kürzer und bildet mit der an ihr anliegenden Kartonlage ein Distanzelement 9 zur Arretierung und Aufrechterhaltung des Abstandes der zum Innenteil 1 gehörenden Stützen 4. Beide Kartonlagen sind fest miteinander verbunden.

Alle Trageteile 3 bildenden Kartonlagen haben in dem Bereich, in dem **die Nähmaschine** befestigt werden soll, Einschnürungen 10.

Die Stützen 4 der Tragebrücke bestehen aus Verbundkarton. Ihr vorbestimmter Abstand wird durch die Distanzelemente 9 und 11 (Fig. 3) und durch das Außenteil 5 gewährleistet, das an den Außenflächen des Innenteils 1 anliegt. Die Distanzelemente 9 und 11 ergänzen das Inntenteil 1, arretieren die Stützen 4 im Außenteil 5 und gewährleisten die Stabilität der Tragebrücke. Das Distanzelement 11 ist ebenso wie das Distanzelement 9 aus zwei miteinander verbundenen Kartonlagen gebildet, von denen die **der Nähmaschine** 2 zugewandte Kartonlage beidseitig um einen der Stützendicke entsprechenden Betrag kürzer ist.

Die Stützen 4 stützen sich auf dem Distanzelement 11 ab, das auf dem Boden des Außenteils 5 aufliegt. Das Trageteil 3 liegt beidseitig auf den Stützen 4 auf und überspannt die Lichte Weite zwischen den Stützen 4 und trägt **die Nähmaschine** 2 in Hängelage. In die Schmalseiten des Außenteils sind Öffnungen 12 eingebracht, die als Griffe dienen und die den Öffnungen 13 der Fortsätze 8 des Trageteils 3 und den Öffnungen 14 der Stützen 4 bezüglich ihrer Lage, Form und Größe entsprechen.

Der Verpackungsvorgang geschieht wie folgt:

**Die** Nähmaschine **2** wird mit **ihrer** Grundfläche möglichst auf die Mitte des Distanzelementes 9 des Trageteils 3 aufgesetzt (Fig. 1) und dort im Bereich der Einschnürung 10 mit Umreifungsbändern 15 festgezurrt.

Anschließend werden die Fortsätze 8 des Trageteils 3 nach oben gefaltet,und das Außenteil 5 wird mit geöffnetem Deckel 7 bei offenem Boden 6 über das Tragteil 3 gestülpt, so daß die Fortsätze 8 an den schmalen Innenseiten des Außenteils 5 zur Anlage kommen. Danach werden die Stützen 4 eingebracht und auf die Auflageflächen 16 des Trageteils 3 gestellt sowie das Distanzelement 11 eingelegt (Fig. 2 und 3). Der Boden 6 des Außenteils 5 wird geschlossen (Fig. 4) und die Verpackungseinheit über die Schmalseite um 180° gewendet (Fig. 5), was durch die als Griffe dienenden und einander korrespondierenden Öffnungen 12, 13, 14 erleichtert wird, so daß das Trageteil 3 mit den Auflageflächen 16 auf den Stützen 4 zu ruhen kommt. **Die Nähmaschine** hängt dadurch am Trageelement 3 zwischen den Stützen 4. In dieser Lage wird der Deckel 7 geschlossen.

## Patentansprüche

1. Verpackung mit einem das Verpackungsgut aufnehmenden Innenteil (1) und einem das Innenteil umgreifenden Außenteil (5), wobei zur Verwendung der Verpackung als Verpackung einer Nähmaschine (2) das Innenteil (1) als eine die Nähmaschine (2) aufnehmende Tragebrücke mit einem Trageteil (3) und mindestens zwei Stützen (4) für das Trageteil (3) ausgebildet ist, wobei die Nähmaschine (2) mittels Befestigungsmitteln (15) mit ihrer Bodenfläche an der Unterseite des Trageteils (3) anliegend mit der Tragebrücke verbunden ist und die Stützen (4) auf dem Boden (6) des Außenteils aufliegend in vorbestimmtem Abstand zueinander gehalten sind und eine Länge aufweisen, die um einen vorbestimmten Betrag größer als die maximale Höhe der Nähmaschine (2) ist.

2. Verpackung nach Anspruch 1, dadurch gekennzeichnet, daß der vorbestimmte Abstand der Stützen durch an ihrer der Nähmaschine jeweils zugekehrten Seitenfläche anliegende Distanzelemente (9; 11) gesichert ist.

3. Verpackung nach Anspruch 1, dadurch gekennzeichnet, daß das Trageteil (3) aus mehreren Materiallagen besteht, von denen wenigstens eine mindestens einen Fortsatz (8) aufweist, der zwischen das Außenteil (5) und eine der Stützen (4) ragt.

4. Verpackung nach Anspruch 1, dadurch gekennzeichnet, daß das Außenteil (5) aus einem Karton mit verschließbarem Boden (6) und Deckel (7) besteht.

5. Verpackung nach Anspruch 1 und 4, dadurch gekennzeichnet, daß der Boden (6) und der Deckel (7) des Außenteils (5) aus mit dessen Seitenflächen scharnierartig verbunden und ineinander verschränkbaren Teilflächen besteht.

6. Verpackung nach Anspruch 1, dadurch gekennzeichnet, daß das Innenteil (1) als Griffe dienende Öffnungen (13; 14) aufweist, die mit im Außenteil (5) vorgesehenen Öffnungen (12) korrespondieren.

## Claims

1. Packaging with an inside section (1) which accommodates the article to be packaged and an outside part (5) which encases the inside section, wherein for the purpose of packaging a sewing machine (2) the inside portion (1) is arranged as a carrier bridge with a carrier part (3) which accommodates the sewing machine (2) and at least two supports (4) for the carrier part (3), wherein the sewing machine (2) is connected to the carrier bridge by means of fastening means (15) so as to abut with its bottom surface against the bottom of the carrier part (3), and the supports (4), which are seated on the bottom (6) of the outside part, are held at a specified distance from one another and are of a length which exceeds the maximum height of the sewing machine (2) by a specified amount.

2. Packaging according to claim 1, **characterised in** **that** the specified distance between the supports is ensured by spacer elements (9; 11) which abut at their lateral surface which is facing towards the sewing machine.

3. Packaging according to claim 1, **characterised in** **that** the carrier part (3) is made of a plurality of layers of material, of which at least one has an extension (8) which extends between the outside part (5) and one of the supports (4).

4. Packaging according to claim 1, **characterised in that** the outside part (5) is composed of a card-board box with closable bottom (6) and lid (7).

5. Packaging according to claim 1 and 4, **characte****rised in that** the bottom (6) and the lid (7) of the outside part (5) are composed of surface sections which are hinge-like connected to its side surfaces and interengageable.

6. Packaging according to claim 1, **characterised in that** the inside portion (1) has cut-outs (13; 14), which serve as handles and which correspond with cut-outs (12) provided in the outside part (5).

## Revendications

1. Emballage, avec une partie intérieure (1), recevant le produit à emballer et une partie extérieure (5) entourant la partie intérieure, la partie intérieure (1) étant réalisée sous forme d'un pont support, recevant la machine à coudre, avec une partie support (3) et au moins deux appuis (4) pour la partie support (3), pour l'utilisation de l'emballage comme emballage d'une machine à coudre (2), la machine à coudre (2) étant reliée au pont support par son socle à l'aide de moyens de fixation (15), en appui contre la face inférieure de la partie support (3), et les appuis (4) reposant sur le fond (6) de la partie extérieure étant maintenus espacés d'une distance prédéterminée et ayant une longueur supérieure, d'une valeur prédéterminée, à la hauteur maximale de la machine à coudre (2).

2. Emballage selon la revendication 1, caractérisé en ce que la distance prédéterminée entre les appuis est assurée au moyen d'éléments d'écartement (9, 11) appuyant sur leur face latérale tournée vers la machine à coudre.

3. Emballage selon la revendication 1, caractérisé en ce que la partie support (3) est composée de plusieurs couches de matériau, dont au moins l'une présente un prolongement (8), se projetant entre la partie extérieure (5) et l'un des appuis (4).

4. Emballage selon la revendication 1, caractérisé en ce que la partie extérieure (5) est composée d'un carton avec un fond (6) et un couvercle (7) pouvant être fermés.

5. Emballage selon les revendications 1 et 4, caractérisé en ce que le fond (6) et le couvercle (7) de la partie extérieure (5) sont reliés en charnière à ses faces latérales et sont composés de faces partielles susceptibles de s'emboîter les unes dans les autres.

6. Emballage selon la revendication 1, caractérisé en ce que la partie intérieure (1) présente des ouvertures (13, (13, 14) servant de poignées, correspondant à des ouvertures (12) prévues dans la partie extérieure (5).
